# EUROPEAN PATENT SPECIFICATION

(11) **EP 2 950 298 B1**
(45) Date of publication and mention of the grant of the patent: **18.09.2019**
(21) Application number: 15155972.1
(22) Date of filing: 20.02.2015
(51) Int. Cl.: G09G 3/20

(54) **Display signal input device, display signal input method, and display system**
Anzeigesignaleingangsvorrichtung, Anzeigesignaleingabeverfahren und Anzeigesystem
Dispositif d'entrée de signal d'affichage, procédé d'entrée de signal d'affichage, et système d'affichage

(30) Priority: 30.05.2014 CN 201410240631
(43) Date of publication of application: 02.12.2015
(73) Proprietor: BOE Technology Group Co., Ltd., Beijing 100015 (CN)
(72) Inventor: Nakai, Tadashi, 100176 Beijing (CN)
(74) Representative: Michalski Hüttermann & Partner Patentanwälte mbB

(56) References cited:
- EP-A2- 0 786 720
- WO-A1-2013/159587

## Description

### Field of the Invention

The present invention relates to the field of display technology, and particularly relates to a display signal input device, a display signal input method and a display system including the display signal input device.

### Background of the Invention

With users' increased requirements for display devices, display devices with ultra-high pixel resolution have emerged. For example, some ultra high definition televisions (UHDs) have reached the pixel resolution at a level of 8k × 4k (i.e., 8000 × 4000, for example, 7680 × 4320).

With increased pixel resolution of a display device, the resolution of images input to the display device is also increased, resulting in a large amount of image information. The maximum image resolution that can be processed by present general image processing chips, signal transmission lines, and on the like is only at the level of 4k × 2k (i.e. 4000 × 2000, for example, 3840 × 2160), and in order to achieve display at the level of 8k × 4k, a plurality of sets of chips and signal transmission lines are needed to respectively transmit a plurality of smaller-sized images (for example, four images at the level of 4k × 2k), and then the smaller-sized images are stitched together into a larger-sized image (for example, an image at the level of 8k × 4k) by the display device. At present, there is no general image signal processing system capable of achieving image stitching to drive a display device at the level of 8k × 4k.

WO 2013/159587 A1 describes a video signal processing method and a camera device. The method includes obtaining a video signal, and splitting several frames of images in the video signal into two or more sub-images; performing first processing on the two or more sub-images of the several frames of images using two or more image sensor processor (ISP) processing units; and outputting the processed two or more sub-images of the several frames of images.

### Summary of the Invention

How to drive an ultra-high resolution display device better is a technical problem that needs to be solved.

The objective of the present invention is to provide a display signal input device, a display signal input method and a display system including the display signal input device to better drive a display device with ultra-high resolution.

According to one aspect of the present invention, there is provided a display signal input device, including: a plurality of sub-image receiving modules, each of which is used for receiving one sub-image and outputting the received sub-image, wherein the plurality of sub-images can be arranged into an original image according to a predetermined sequence; and an image stitching module, used for synthesizing display signals corresponding to the respective sub-images and outputting the synthesized display signals in groups.

According to an embodiment of the present invention, the image stitching module may include a storage module adapted for buffering the sub-images outputted by the sub-image receiving modules and for outputting the buffered sub-images.

According to of the present invention, the image stitching module includes an image stitching sequence determination module adapted for determining whether the plurality of sub-images outputted by the plurality of sub-image receiving modules are arranged in the predetermined sequence, when it is determined that the plurality of sub-images are not arranged in the predetermined sequence, the image stitching sequence determination module being adapted for adjusting the plurality of sub-images to be in the predetermined sequence, and the image stitching module being adapted for outputing display signals corresponding to the plurality of sub-images in groups according to the predetermined sequence.

According to the present invention, the image stitching sequence determination module includes: an edge matching unit adapted for determining whether two adjacent sub-images have matched contact edges; and a sequence adjustment unit, which is adapted for adjusting positions of the sub-images until any two adjacent sub-images have matched contact edges, when the edge matching unit determines that the two adjacent sub-images do not have matched contact edges.

According to an embodiment of the present invention, the image stitching sequence determination module may also include: an edge enhancement unit adapted for performing enhancement processing on edges of the plurality of sub-images, and the edge matching unit being adapted for determing the enhanced sub-images; and an image restoring unit adapted for restoring the edges of the plurality of sub-images to a state before the enhancement processing was performed before outputting the display signals corresponding to the plurality of sub-images in groups.

According to an embodiment of the present invention, the display signal input device may also include a segmentation way determination module adapted for determining an applicable stitching way based on pixel resolution of the plurality of sub-images.

According to another aspect of the present invention, there is provided a display signal input method, including steps of: S10, receiving a plurality of sub-images, wherein the plurality of sub-images can be arranged into an original image according to a predetermined sequence; and S20, synthesizing display signals corresponding to the sub-images and outputting the synthesized display signals in groups.

According to the present invention, step S20 includes steps of: S21, determining whether the plurality of sub-images are arranged in the predetermined sequence; S22, when it is determined that the plurality of sub-images are not arranged in the predetermined sequence, adjusting the plurality of sub-images to be in the predetermined sequence; and S23, outputting display signals corresponding to the plurality of sub-images in groups according to the predetermined sequence.

According to the present invention, it is determined in step S21 that whether two adjacent sub-images have matched contact edges, and if not, it can be determined that the plurality of sub-images are not arranged in the predetermined sequence, and positions of the sub-images may be adjusted in step S22 until any two adjacent sub-images have matched contact edges.

According to an embodiment of the present invention, step S20 may include, prior to step S21, a step of: S21a, performing enhancement processing on edges of the plurality of sub-images, and prior to step S23, a step of: S23a, restoring the edges of the plurality of sub-images to the state before the enhancement processing was performed.

According to an embodiment of the present invention, between step S10 and step S20, a step of: S15, determining an applicable stitching way based on pixel resolution of the plurality of sub-images, may be included.

According to another aspect of the present invention, there is provided a display system, including a display panel and a display signal input device according to the present invention. The display signal input device is connected to the display panel, the display panel is divided into a plurality of display areas corresponding to the plurality of sub-images, and the image stitching module of the display signal input device outputs display signals corresponding to the respective sub-images in groups to corresponding display areas of the display panel.

When the signal input device according to the present invention is used to input display signals, for an original image with higher pixel resolution (e.g., an image with pixel resolution of 3840 × 2160 or 7680 × 4320), it needs to be divided into a plurality of sub-images, so that each sub-image has relatively low pixel resolution and is thus easy to output. Moreover, compared with the way of overall driving the display panel, it is relatively easy to send the display signals of the respective sub-images to different display areas of the display panel in groups, so as to drive the plurality of display areas of the display panel, respectively.

### Description of the Drawings

The accompanying drawings, which constitute a part of this specification, are used for providing a further understanding of the present invention, and used for explaining the present invention together with the specific embodiments below, rather than limiting the present invention, in which:
Fig. 1 is a schematic diagram of a signal input device according to an embodiment of the present invention;
Fig. 2 schematically shows a way of segmenting an original image; and
Fig. 3 is a flowchart schematically showing a display signal input method according to an embodiment of the present invention.

### Detailed Description of the Embodiments

The specific embodiments of the present invention will be described in detail below in conjunction with the accompanying drawings. It should be understood that the specific embodiments described herein are only intended to illustrate and explain the present invention, but not intended to limit the present invention.

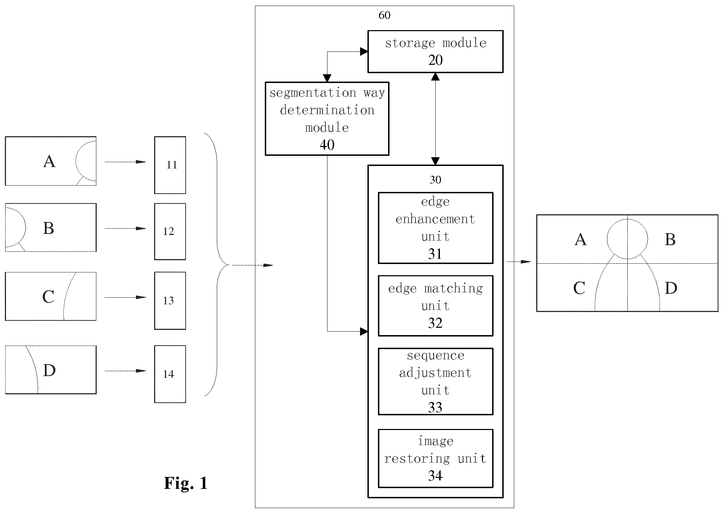

Fig. 1 is a schematic diagram of a signal input device according to an embodiment of the present invention. As shown in Fig. 1, the display signal input device according to an embodiment of the present invention includes a plurality of sub-image receiving modules 11-14, each of which is used for receiving one sub-image and outputting the received sub-image. The plurality of sub-images can be arranged into an original image according to a predetermined sequence. That is to say, the plurality of sub-images are obtained by dividing the original image according to the predetermined sequence. Although Fig. 1 shows a case in which the original image is divided into four sub-images and the four sub-image receiving modules 11-14 correspond to the four sub-images, respectively, the concept of the present invention is not limited thereto. The original image may be divided into other number of sub-images according to a specific condition, and a plurality of sub-image receiving modules corresponding to the number of the sub-images may be provided.

The display signal input device according to an embodiment of the present invention further includes an image stitching module 60 for synthesizing the display signals corresponding to the respective sub-images and outputting the synthesized display signals in groups. A display device receiving the display signals, which are outputted by the image stitching module 60, corresponding to the sub-images can display an image consistent with the original image (i.e., a re-synthesized image after the original image was divided).

The working principle of the display signal input device according to the concept of the present invention will be described below in conjunction with the detailed embodiment exemplarily shown in Fig. 1.

As shown in Fig. 1, the original image is first divided into sub-images A to D. The original image may be divided according to a predetermined sequence. Fig. 1 exemplarily shows one predetermined sequence, i.e., the sub-image A is arranged in the first row and the first column, the sub-image B is arranged in the first row and the second column, the sub-image C is arranged in the second row and the first column, and sub-image D is arranged in the second row and the second column.

The display signal input device shown in Fig. 1 according to an embodiment of the present invention includes four sub-image receiving modules 11-14 for transferring the sub-images A to D to the image stitching module 60, respectively. The image stitching module 60 then outputs the display signals corresponding to the sub-images in groups to display areas of the display panel. For example, the image stitching module 60 outputs a first set of display signals corresponding to the sub sub-image A, a second set of display signals corresponding to the sub-image B, a third set of display signals corresponding to the sub-image C and a fourth set of display signals corresponding to the sub-image D to the respective display areas of the display panel, respectively. The display areas of the display panel display the corresponding sub-images, respectively, so that the entire display panel may display an image consistent with the original image.

It can be easily understand that, each group of display signals drive only the pixels in the display area corresponding thereto, and compared with the way of driving all the pixels in the entire display panel at one time, the multiple sets of display signals input by the signal input device according to the concept of the present invention can relatively easily drive pixels within the display areas of the display panel.

According to an embodiment of the present invention, the image stitching module 60 may include a storage module 20 and an image stitching sequence determination module 30. The storage module 20 is used for buffering the sub-images outputted by the sub-image receiving modules and outputting the buffered sub-images.

According to an embodiment of the present invention, sub-image receiving modules may output the sub-images to the display image stitching module 60 in a sequence same as the predetermined sequence in which the original image is divided. For example, as shown in Fig. 1, the first sub-image receiving module 11 is used to transfer the sub-image A, the second sub-image receiving module 12 is used to transfer the sub-image B, the third sub-image receiving module 13 is used to transfer the sub-image C, and the fourth sub-image receiving module 14 is used to transfer the sub-image D.

Alternatively, according to another embodiment of the present invention, the plurality of sub-image receiving modules may transmit the plurality of sub-images at random, i.e., the sub-images are not output to the display image stitching module 60 in a sequence same as the predetermined sequence in which the original image is divided. If the plurality of sub-images are not output to the display image stitching module 60 in a sequence same as the predetermined sequence in which the original image is divided, the display image stitching module 60 may adjust the sequence of the plurality of sub-images output by the plurality of sub-image receiving modules (and/or buffered in the storage module 20) before outputting the plurality of sub-images to the display panel in groups.

The image stitching sequence determination module 30 included in the image stitching module 60 may be used to determine whether the plurality of sub-images outputted by the plurality of sub-image receiving modules are arranged in a predetermined sequence. When it is determined that the plurality of sub-images are not arranged in the predetermined sequence (i.e., when the sequence in which the sub-images are transferred by the respective sub-image receiving modules is not consistent with the sequence in which the original image is divided), the image stitching sequence determination module 30 may adjust the plurality of sub-images to be in the predetermined sequence (i.e., adjust to be in a sequence consistent with the sequence in which the original image is divided). The image stitching module 60 then outputs the plurality of sub-images arranged in the predetermined sequence in groups to the display panel so as to correspond to the respective display areas of the display panel.

For example, whether the plurality of sub-image receiving modules output the plurality of sub-images in the predetermined sequence may be determined by determining whether two adjacent sub-images have matched contact edges.

It should be recognized that "two adjacent sub-images" refer to two sub-images adjacent to each other in the original image according to the predetermined sequence in which the original image is divided. For example, the sub-image A transferred by the first sub-image receiving module 11 and the sub-image C transferred by the third sub-image receiving module 13 are two sub-images adjacent to each other on the original image. If it is determined that the sub-image transferred by the first sub-image receiving module 11 and the sub-image transferred by the third sub-image receiving module 13 do not have matched contact edges, then it can be determined that the plurality of sub-image receiving modules do not output the plurality of sub-images in a sequence consistent with the sequence in which the original image is divided.

It should also be recognized that "matched contact edges" means the contact edges that two adjacent sub-images should have according to the predetermined sequence in which the original image is divided. For example, if it is determined that the lower edge of the sub-image transferred by the first sub-image receiving module 11 and the upper edge of the sub-image transferred by the third sub-image receiving module 13 are two edges in contact with each other in the original image, it can be determined that the sub-image transferred by the first sub-image receiving module 11 and the sub-image transferred by the third sub-image receiving module 13 have matched contact edges. As another example, even if it is determined that the left edge of the sub-image transferred by the first sub-image receiving module 11 and the right edge of the sub-image transferred by the second sub-image receiving module 12 are two edges in contact with each other in the original image, it can be determined that the sub-image transferred by the first sub-image receiving module 11 and the sub-image transferred by the second sub-image receiving module 12 do not have matched contact edges, because the sub-image transferred by the first sub-image receiving module 11 should have a right edge in contact with a left edge of the sub-image transferred by the second sub-image receiving module 12.

Two adjacent sub-images in the original image should include contact edges adjacent to each other, i.e., the pixels in the contact edges of the two adjacent sub-images should be continuously consistent in color, gray scale and the like. If any two adjacent sub-images have matched contact edges (e.g., the sub-image transferred by the first sub-image receiving module 11 and the sub-image transferred by the second sub-image receiving module 12 have matched edges, the sub-image transferred by the first sub-image receiving module 11 and the sub-image transferred by the third sub-image receiving module 13 have matched edges, the sub-image transferred by the second sub-image receiving module 12 and the sub-image transferred by the fourth sub-image receiving module 14 have matched edges, and the sub-image transferred by the third sub-image receiving module 13 and the sub-image transferred by the fourth sub-image receiving module 14 have matched edges), then the plurality of sub-images are arranged in the sequence consistent with the sequence in which the original image is divided.

According to an embodiment of the present invention, the image stitching sequence determination module 30 may include an edge matching unit 32 and a sequence adjustment unit 33. The edge matching unit 32 is used for determining whether two adjacent sub-images have matched contact edges. When the edge matching unit 32 determines that the two adjacent sub-images do not have matched contact edges (i.e., the plurality of sub-images are not arranged in the sequence consistent with the sequence in which the original image is divided), the sequence adjustment unit 33 is used to adjust the positions of the sub-images until any two adjacent sub-images have matched contact edges.

The sequence adjustment unit 33 may adjust the positions of the sub-images by re-distributing output indices to the sub-images. The re-distributed output indices should be consistent with the sequence in which the original image is divided. When a sequence in which the sub-images are input is consistent with the sequence in which the original image is divided, the sub-images may be re-distributed with the output indices according to the sequence in which the respective sub-images are input. Subsequently, the display signals corresponding to the sub-images are output in groups to the display panel based on the output indices thereof so as to correspond to the respective display areas of the display panel.

It should be recognized that in the context of the application, the term "synthesizing" performed on display signals corresponding to sub-images by the image stitching module should be understood as sorting the output sequence of the display signals corresponding to the sub-images, so as to output the display signals in groups in the sequence consistent with the sequence in which the original image is divided.

In order to facilitate determining whether the two sub-images have contact edges in the original image, according to an embodiment of the present invention, the image stitching sequence determination module 30 may further include an edge enhancement unit 31 for performing enhancement processing on the edges of the plurality of sub-images and then determining the enhanced sub-images. In addition, the image stitching sequence determination module 30 may further include an image restoring unit 34 for restoring the edges of the plurality of sub-images to the state before the enhancement processing was performed before outputting the display signals corresponding to the plurality of sub-images in groups.

According to an embodiment of the invention, the edges of the sub-images may be enhanced by way of filtering.

The original image is segmented into a plurality of sub-images before being input to the display signal input device according to the concept of the present invention. The image segmentation module may be connected to the sub-image receiving modules through high-speed interfaces such as digital video interfaces (DVIs), high-definition multimedia interfaces (HDMIs), display ports, or the like.

How to segment the whole original image into multiple sub-images is easy to realize, and is not repeated herein.

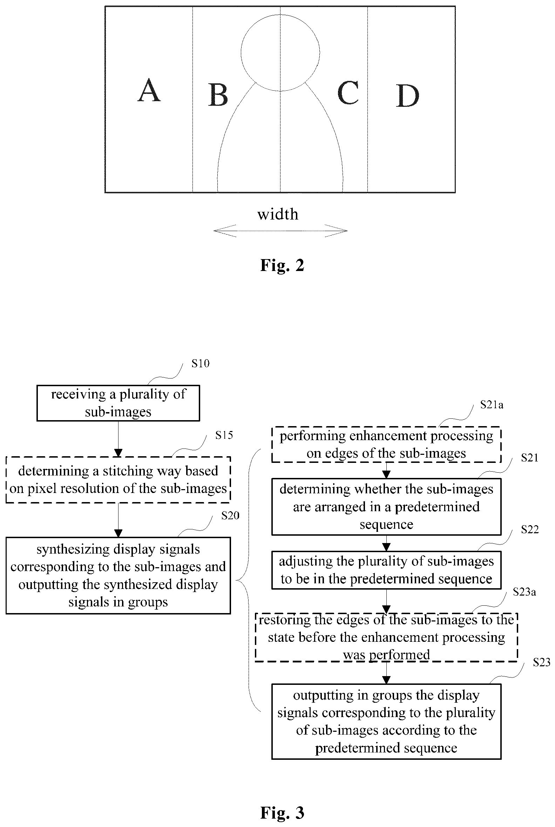

Fig. 1 shows one way in which the original image is segmented, and Fig. 2 shows another way in which the original image is segmented. For the original image having the same pixel resolution, the sub-images obtained according to different segmenting ways may have different pixel resolutions.

According to an embodiment of the present invention, the image stitching module 60 may further include a segmentation way determination module 40 for determining the applicable stitching way based on the pixel resolution of the sub-images, i.e., determining the stitching way corresponding to the segmentation way.

Before the image stitching sequence determination module 30 determines whether the plurality of sub-images are arranged in the predetermined sequence, the segmentation way determination module 40 may be used to determine which way is adopted to segment the original image, and then determine the predetermined sequence (i.e., to determine the applicable stitching way).

In addition, the segmentation way determination module 40 may determine the segmentation way based on the pixel resolution of the sub-images before buffering the sub-images outputted by the sub-image receiving modules into the storage module 20. Alternatively, the segmentation way determination module 40 may determine the segmentation way based on the pixel resolution of the buffered sub-images after buffering the sub-images into the storage module 20.

Fig. 3 is a flowchart schematically showing a display signal input method according to an embodiment of the present invention. As shown in Fig. 3, a display signal input method according to an embodiment of the present invention may include steps of: receiving a plurality of sub-images (S10), wherein the plurality of sub-images can be arranged into the original image according to a predetermined sequence; determining the applicable stitching way according to the pixel resolution of the plurality of sub-images (S15); and synthesizing the display signals corresponding to the sub-images and outputting the synthesized display signals in groups (S20).

The sub-image receiving module shown in Fig. 1 may be used to perform step S10, and the image stitching module 60 shown in Fig. 1 may be used to perform steps S15 and S20. Among these steps, step S15 denoted by a dashed box is optional, and step S15 may be omitted when the original image is segmented only in a single way.

On the right side of Fig. 3, steps that may be included in step S20 are shown as follows: performing enhancement processing on edges of the plurality of sub-images (S21a); determining whether the plurality of sub-images are arranged in the predetermined sequence (S21); when it is determined that the plurality of sub-images are not arranged in the predetermined sequence, adjusting the plurality of sub-images to be in the predetermined sequence (S22); restoring the edges of the plurality of sub-images to the state before the enhancement processing was performed (S23a); and outputting the display signals corresponding to the plurality of sub-images in groups according to the predetermined sequence (S23). Among these steps, steps S21a and S23a denoted by dotted boxes are optional, i.e., according to an embodiment of the present invention, the enhancement processing on the edges of the sub-images and the subsequent restoring processing may be omitted. The edge enhancement unit 31 shown in Fig. 1 may be used to perform step S21a, and the image restoring unit 34 shown in Fig. 1 may be used to perform step S23a.

According to an embodiment of the invention, if the plurality of sub-images are received in the sequence consistent with the sequence in which the original image is divided (i.e., the predetermined sequence) in step S10, the above steps S21 and S22 may also be omitted.

According to another embodiment of the present invention, if the multiple sub-images are received at random in step S10, then whether two adjacent sub-images have matched contact edges is determined, in step S21, and when it is determined that the two adjacent sub-images do not have matched contact edges, it is determined that the plurality of sub-images are not arranged in the predetermined sequence; and positions of the sub-images are adjusted until any two adjacent sub-images have matched contact edges, in the step S22. The edge matching unit 32 shown in Fig. 1 may be used to perform step S21, and the sequence adjustment unit 33 shown in Fig. 1 may be used to perform step S22.

According to another aspect of the invention, there is provided a display system including a display panel and a display signal input device according to the present invention. The display signal input device is connected to the display panel, the display panel is divided into a plurality of display areas corresponding to the plurality of sub-images, and the image stitching module of the display signal input device outputs the display signals corresponding to the sub-images in groups to the respective display areas of the display panel. The display system according to the invention may be implemented as a super high definition LCD TV, a LCD, an organic light-emitting diode (OLED) display, a plasma display and on the like.

It can be understood that the above embodiments are only exemplary embodiments for illustrating the principle of the present invention, but the present invention is not limited thereto. Various variations and improvements can be made by those skilled in the art without departing from the claims, and these variations and improvements should also be considered as falling within the protection scope of the present invention.

## Claims

1. A display signal input device, comprising:
a plurality of sub-image receiving modules, each of which being adapted for receiving one sub-image and outputting the received sub-image;
an image stitching module, adapted for synthesizing display signals corresponding to the respective sub-images;
wherein the image stitching module comprises an image stitching sequence determination module adapted for determining whether the plurality of sub-images outputted by the plurality of sub-image receiving modules are arranged in the predetermined sequence, when it is determined that the plurality of sub-images are not arranged in the predetermined sequence, the image stitching sequence determination module being adapted for arranging the plurality of sub-images into an original image according to a predetermined sequence, and the image stitching module being adapted for outputting the synthesized display signals corresponding to the plurality of sub-images in groups according to the predetermined sequence.
**characterised in that** the image stitching sequence determination module comprises:
an edge matching unit, adapted for determining whether two adjacent sub-images have matched contact edges; and
a sequence adjustment unit, which is adapted for adjusting positions of the sub-images until any two adjacent sub-images have matched contact edges, when the edge matching unit determines that the two adjacent sub-images do not have matched contact edges.

2. The display signal input device according to claim 1, wherein the image stitching module comprises a storage module adapted for buffering the sub-images outputted by the sub-image receiving modules and for outputting the buffered sub-images.

3. The display signal input device according to claim 1, wherein the image stitching sequence determination module further comprises:
an edge enhancement unit, adapted for performing enhancement processing on edges of the plurality of sub-images, and the edge matching unit being adapted for determing the enhanced sub-images; and
an image restoring unit, adapted for restoring the edges of the plurality of sub-images to a state before the enhancement processing was performed before outputting the display signals corresponding to the plurality of sub-images in groups.

4. The display signal input device according to any one of claims 1-3, further comprising a segmentation way determination module, adapted for determining an applicable stitching way based on pixel resolution of the plurality of sub-images.

5. A display signal input method, comprising steps of:
S10, receiving a plurality of sub-images, wherein the plurality of sub-images are capable of being arranged into an original image according to a predetermined sequence;
S20, synthesizing display signals corresponding to the sub-images and outputting the synthesized display signals in groups,
wherein step S20 include steps of:
S21, determining whether the plurality of sub-images are arranged in the predetermined sequence;
S22, when it is determined that the plurality of sub-images are not arranged in the predetermined sequence, adjusting the plurality of sub-images to be in the predetermined sequence;
S23, outputting display signals corresponding to the plurality of sub-images in groups according to the predetermined sequence.
**characterised in that** in step S21, it is determined whether two adjacent sub-images have matched contact edges, and when it is determined that the two adjacent sub-images do not have matched contact edges, it is determined that the plurality of sub-images are not arranged in the predetermined sequence,
wherein in step S22, positions of the sub-images are adjusted until any two adjacent sub-images have matched contact edges.

6. The display signal input method according to claim 5, wherein step S20 further comprises steps of:
S21a prior to step S21, performing enhancement processing on edges of the plurality of sub-images; and
S23a prior to step S23, restoring the edges of the plurality of sub-images to a state before the enhancement processing was performed.

7. The display signal input method according to any one of claims 5-6, further comprising, between step S10 and step S20, a step of:
S15, determining an applicable stitching way based on pixel resolution of the plurality of sub-images.

8. A display system, comprising a display panel and a display signal input device according to any one of claims 1-4,
wherein the display signal input device is connected to the display panel, the display panel is divided into a plurality of display areas corresponding to the plurality of sub-images, and the image stitching module outputs the display signals corresponding to the sub-images in groups to the respective display areas of the display panel.

## Patentansprüche

1. Displaysignaleingabevorrichtung mit:
mehreren Teilbildempfangsmodulen, die jeweils dazu eingerichtet sind, ein Teilbild zu empfangen und das empfangene Teilbild auszugeben;
einem Bild-Stitching-Modul, das dazu eingerichtet ist, den jeweiligen Teilbildern entsprechende Displaysignale zu synthetisieren,
wobei das Bild-Stitching-Modul ein Bild-Stitching-Sequenzbestimmungsmodul aufweist, das dazu eingerichtet ist, zu bestimmen, ob die mehreren Teilbilder, die durch die mehreren Teilbildempfangsmodule ausgegeben werden, in der vorgegebenen Sequenz angeordnet sind, wobei, wenn bestimmt wird, dass die mehreren Teilbilder nicht in der vorgegebenen Sequenz angeordnet sind, das Bild-Stitching-Sequenzbestimmungsmodul dazu eingerichtet ist, die mehreren Teilbilder gemäß einer vorgegebenen Sequenz zu einem Originalbild anzuordnen, und wobei das Bild-Stitching-Sequenzmodul dazu eingerichtet ist, die synthetisierten Displaysignale entsprechend den mehreren Teilbildern gemäß der vorgegebenen Sequenz in Gruppen auszugeben;
**dadurch gekennzeichnet, dass**
das Bild-Stitching-Sequenzbestimmungsmodul aufweist:
eine Kantenanpassungseinheit, die dazu eingerichtet ist, zu bestimmen, ob zwei benachbarte Teilbilder übereinstimmende Kontaktkanten haben; und
eine Sequenzeinstelleinheit, die dazu eingerichtet ist, Positionen der Teilbilder einzustellen, bis zwei beliebige benachbarte Teilbilder übereinstimmende Kontaktkanten aufweisen, wenn die Kantenanpassungseinheit bestimmt, dass die zwei benachbarten Teilbilder keine übereinstimmenden Kontaktkanten aufweisen.

2. Displaysignaleingabevorrichtung nach Anspruch 1, wobei das Bild-Stitching-Modul ein Speichermodul aufweist, das dazu eingerichtet ist, die durch die Teilbildempfangsmodule ausgegebenen Teilbilder zu puffern und die gepufferten Teilbilder auszugeben.

3. Displaysignaleingabevorrichtung nach Anspruch 1, wobei das Bild-Stitching-Sequenzbestimmungsmodul ferner aufweist:
eine Kantennachbesserungseinheit, die dazu eingerichtet ist, eine Nachbesserungsverarbeitung bezüglich den Kanten der mehreren Teilbilder auszuführen, wobei die Kantenanpassungseinheit dazu eingerichtet ist, die nachgebesserten Teilbilder zu bestimmen; und
eine Bildwiederherstellungseinheit, die dazu eingerichtet ist, die Kanten der mehreren Teilbilder in einen Zustand wiederherzustellen, der vor dem Ausführen der Nachbesserungsverarbeitung vorlag, bevor die den mehreren Teilbildern entsprechenden Displaysignale in Gruppen ausgegeben werden.

4. Displaysignaleingabevorrichtung nach einem der Ansprüche 1 bis 3, ferner mit einem Segmentierungswegbestimmungsmodul, das dazu eingerichtet ist, einen anwendbaren Stitching-Weg basierend auf der Pixelauflösung der mehreren Teilbilder zu bestimmen.

5. Displaysignaleingabeverfahren mit den Schritten:
S10: Empfangen mehrerer Teilbilder, wobei die mehreren Teilbilder dazu geeignet sind, gemäß einer vorgegebenen Sequenz zu einem Originalbild angeordnet zu werden;
S20: Synthetisieren von Displaysignalen, die den Teilbildern entsprechen, und Ausgeben der synthetisierten Displaysignale in Gruppen,
wobei Schritt S20 die folgenden Schritte aufweist:
S21: Bestimmen, ob die mehreren Teilbilder in der vorgegebenen Sequenz angeordnet sind;
S22: wenn bestimmt wird, dass die mehreren Teilbilder nicht in der vorgegebenen Sequenz angeordnet sind, Einstellen der mehreren Teilbilder derart, dass sie in der vorgegebenen Sequenz angeordnet sind;
S23: Ausgeben von den mehreren Teilbildern entsprechenden Displaysignalen in Gruppen gemäß der vorgegebenen Sequenz,
**dadurch gekennzeichnet, dass**
in Schritt S21 bestimmt wird, ob zwei benachbarte Teilbilder übereinstimmende Kontaktkanten haben, und wenn bestimmt wird, dass die zwei benachbarten Teilbilder keine übereinstimmende Kontaktkanten haben, bestimmt wird, dass die mehreren Teilbildern nicht in der vorgegebenen Sequenz angeordnet sind,
wobei in Schritt S22 die Positionen der Teilbilder eingestellt werden, bis zwei beliebige benachbarte Teilbilder übereinstimmende Kontaktkanten aufweisen.

6. Displaysignaleingabeverfahren nach Anspruch 5, wobei Schritt S20 ferner die Schritte aufweist:
S21a: Ausführen einer Nachbesserungsverarbeitung bezüglich Kanten der mehreren Teilbilder vor Schritt S21; und
S23a: Wiederherstellen der Kanten der mehreren Teilbilder in einen Zustand, der vorlag, bevor die Nachbesserungsverarbeitung ausgeführt wurde, vor Schritt S23.

7. Displaysignaleingabeverfahren nach einem der Ansprüche 5 bis 6, ferner mit einem zwischen Schritt S10 und Schritt S20 ausgeführten Schritt S15 zum Bestimmen eines anwendbaren Stitching-Weges basierend auf der Pixelauflösung der mehreren Teilbilder.

8. Displaysystem mit einem Display und einer Displaysignaleingabevorrichtung nach einem der Ansprüche 1 bis 4,
wobei die Displaysignaleingabevorrichtung mit dem Display verbunden ist, wobei das Display in mehrere Anzeigebereiche unterteilt ist, die den mehreren Teilbildern entsprechen, und wobei das Bild-Stitching-Modul den Teilbildern entsprechende Displaysignale in Gruppen an die jeweiligen Anzeigebereiche des Displays ausgibt.

## Revendications

1. Dispositif d'entrée de signal d'affichage comprenant :
une pluralité de modules de réception de sous-images, dont chacun est adapté pour recevoir une sous-image et émettre en sortie la sous-image reçue ;
un module d'assemblage d'image adapté pour synthétiser des signaux d'affichage correspondant aux sous-images respectives ;
où le module d'assemblage d'image comprend un module de détermination de séquence d'assemblage d'image adapté pour déterminer si la pluralité des sous-images émise en sortie par la pluralité de modules de réception de sous-images est agencée dans la séquence prédéterminée, lorsqu'il est déterminé que la pluralité des sous-images n'est pas agencée dans la séquence prédéterminée, le module de détermination de séquence d'assemblage d'image est adapté pour agencer la pluralité des sous-images dans une image d'origine selon une séquence prédéterminée, et le module d'assemblage d'image est adapté pour émettre en sortie les signaux d'affichage synthétisés correspondant à la pluralité des sous-images en groupes selon la séquence prédéterminée,
**caractérisé en ce que** le module de détermination de séquence d'assemblage d'image comprend :
une unité de mise en correspondance de bord, adaptée pour déterminer si deux sous-images adjacentes ont mis en correspondance des bords de contact ; et
une unité d'ajustement de séquence qui est adaptée pour ajuster des positions des sous-images jusqu'à ce que deux sous-images adjacentes ont mis en correspondance leurs bords de contact, lorsque l'unité de mise en correspondance de bord détermine que les deux sous-images adjacentes n'ont pas de mise en correspondance de bords de contact.

2. Dispositif d'entrée de signal d'affichage selon la revendication 1, dans lequel le module d'assemblage d'image comprend un module de stockage adapté pour mettre en mémoire tampon les sous-images émises par les modules de réception de sous-images et pour émettre en sortie les sous-images mises en mémoire tampon.

3. Dispositif d'entrée de signal d'affichage selon la revendication 1, dans lequel le module de détermination de séquence d'assemblage d'images comprend en outre :
une unité d'amélioration de bord adaptée pour effectuer un traitement d'amélioration sur des bords de la pluralité de sous-images, et l'unité de mise en correspondance de bord étant adaptée pour déterminer les sous-images améliorées ; et
une unité de restauration d'image adaptée pour restaurer les bords de la pluralité de sous-images à un état d'avant que le traitement d'amélioration n'ait été exécuté avant l'émission de signaux d'affichage correspondant à la pluralité des sous-images en groupes.

4. Dispositif d'entrée de signal d'affichage selon l'une quelconque des revendications 1 à 3, comprenant en outre un module de détermination de mode de segmentation adapté pour déterminer un mode d'assemblage applicable sur la b ase d'une résolution de pixel de la pluralité de sous-images.

5. Procédé d'entrée de signal d'affichage comprenant les étapes :
S10, de réception d'une pluralité de sous-images, la pluralité de sous-images étant susceptible d'être agencée en une image d'origine selon une séquence prédéterminée ;
S20, de synthèse de signaux d'affichage correspondant aux sous-images et d'émission des signaux d'affichage synthétisés en groupes,
l'étape S20 comportant les étapes :
S21, de détermination si la pluralité des sous-images est agencée dans la séquence prédéterminée ;
S22, s'il est déterminé que la pluralité de sous-images n'est pas agencée dans la séquence prédéterminée, d'ajustement de la pluralité de sous-images pour qu'elle soit dans la séquence prédéterminée ;
S23, d'émission en sortie de signaux d'affichage correspondant à la pluralité de sous-images en groupes selon la séquence prédéterminée,
**caractérisé en ce que**, dans l'étape S21, il est déterminé si deux sous-images adjacentes n'ont pas de bords de contact mis en correspondance, et s'il est déterminé que les deux sous-images adjacentes n'ont pas de bords de contact mis en correspondance, il est déterminé que la pluralité de sous-images n'est pas agencée dans la séquence prédéterminée,
où, dans l'étape S22, des positions des sous-images sont ajustées jusqu'à ce que deux sous-images adjacentes quelconques aient des bords de contact mis en correspondance.

6. Procédé d'entrée de signal d'affichage selon la revendication 5, dans lequel l'étape S20comprend en outre les étapes :
S21a avant l'étape S21, d'exécution du traitement d'amélioration sur des bords de la pluralité de sous-images ; et
S23a avant l'étape S23, de restauration des bords de la pluralité de sous-images à un état d'avant que le traitement d'amélioration n'ait été fait.

7. Procédé d'entrée de signal d'affichage selon l'une quelconque des revendications 5 ou 6, comprenant en outre, entre l'étape S10 et l'étape S20, une étape :
S15, de détermination d'un mode d'assemblage applicable basé sur une résolution de pixel de la pluralité de sous-images.

8. Système d'affichage comprenant un panneau d'affichage et un dispositif d'entrée de signal d'affichage selon l'une quelconque des revendications 1 à 4,
dans lequel le dispositif d'entrée de signal d'affichage est relié au panneau d'affichage, le panneau d'affichage est divisé en une pluralité de zones d'affichage correspondant à la pluralité de sous-images, et le module d'assemblage d'image émet en sortie des signaux d'affichage correspondant aux sous-images en groupes par rapport aux zones d'affichage respectives du panneau d'affichage.
